# EUROPEAN PATENT APPLICATION

(11) **EP 2 347 835 A1**
(43) Date of publication of application: **27.07.2011**
(21) Application number: 08877278.5
(22) Date of filing: 10.10.2008
(51) Int. Cl.: B09C 1/02, B09B 3/00, B09C 1/08

(54) **FLUORINE INSOLUBILIZING AGENT, GYPSUM WITH ELUTION OF FLUORINE CONTAINED THEREIN BEING REDUCED, AND METHOD FOR TREATING SOIL CONTAMINATED WITH FLUIRINE**

(71) Applicant: Institute of National Colleges of Technology, Japan, Hachioji-shi, Tokyo 193-0834 (JP); Chiyoda UTE Co., Ltd., Yokkaichi-shi, Mie 512-8003 (JP)
(72) Inventor: TAFU, Masamoto, Toyama-shi Toyama 939-8630 (JP); CHOHJI, Tetsuji, Toyama-shi Toyama 939-8630 (JP); FUJITA, Takumi, Mie-gun Mie 510-8570 (JP); NAKANO, Hirokazu, Mie-gun Mie 510-8570 (JP); MORIOKA, Ichiro, Mie-gun Mie 510-8570 (JP); MORI, Katsumi, Mie-gun Mie 510-8570 (JP); HIWASA, Masaya, Mie-gun Mie 510-8570 (JP); MAEDA, Makoto, Mie-gun Mie 510-8570 (JP); TAKENAKA, Kazumasa, Mie-gun Mie 510-8570 (JP)
(74) Representative: Lumsden, Stuart Edward Henry
(86) International application number: PCT/JP2008/068441
(87) International publication number: WO 2010/041330

(57) **Abstract**

In order to provide an insolubilizing agent for fluorine capable of economically and efficiently reducing, with an easy operation, the amount of fluorine elution from gypsum containing fluorine, soil contaminated with fluorine, or the like to be 0.8 mg/L or less which is the soil environment standard as one standard, and to provide gypsum reduced in the amount of fluorine elution by using the agent, and a method of treating fluorine contaminated soil by using the agent, an insolubilizing agent for fluorine obtained by activating calcium hydrogen phosphate dihydrate for 0.5 minutes or more in water at 40°C or more was used, where a mass ratio of water/calcium hydrogen phosphate dihydrate is 25 or more.

## Description

### BACKGROUND OF THE INVENTION

### Field of the Invention

The present invention relates to an insolubilizing agent for fluorine, gypsum reduced in the elution of contained fluorine by using the insolubilizing agent for fluorine, and a method of treating fluorine contaminated soil by using the insolubilizing agent for fluorine. For example, when a waste material of gypsum board which is used as a building material is subjected to landfill disposal, the amount of fluorine elution coming from the waste material is required to decrease as lower as possible in a viewpoint of environment protection. As one standard, the amount of fluorine elution is required to be 0.8 mg/L or less which is the environmental standard for soil pollution. Of course, the main raw material of the gypsum board is gypsum, and the gypsum is naturally produced, or artificially produced or by-produced. However, although the degree of the amount of fluorine is different in these gypsums, the artificially by-produced gypsum such as phosphoric acid gypsum includes the corresponding amounts of fluorine, and the fluorine is brought into the gypsum board as a product and further into the waste material of the gypsum board. As a result of this, there is a problem that the fluorine elution coming from the waste material is caused. The fluorine is not only used in such gypsum but also originally used in the wide fields of high technology industries. Accordingly, fluorine contaminated waste water or soil comes to be a serious problem. In Japan, the amount of the aforementioned waste material of the gypsum board may exceed 1,500,000 tons annually. In addition to the case that the waste material is subjected to landfill disposal, when the waste material is utilized as, for example, a soil solidifying agent, the fluorine contaminated soil is a serious problem. The present invention relates to an insolubilizing agent for fluorine which can efficiently insolubilize fluorine so that the amount of fluorine elution coming from the waste material of gypsum containing fluorine, the fluorine contaminated soil and the like, can be reduced to, as one standard, 0.8 mg/L or less which is the soil environment standard. The present invention also relates to gypsum reduced in the elution of the contained fluorine by using the insolubilizing agent for fluorine, and a method of treating fluorine contaminated soil by using the insolubilizing agent for fluorine.

### Description of the Conventional Art

As methods of treating gypsum reduced in the elution of contained fluorine, the following methods have been conventionally known. That is, a method for adding an aluminum compound, such as sodium aluminate, to gypsum containing fluorine (e.g., refer to Japanese Patent Application Laid-Open No. 2001-253755), a method for adding an alkali to a gypsum slurry containing fluorine to raise pH to 9 or more, thereafter adding an acid to prepare pH to 6 or more by a lowering range of 1 or more, and adding calcium phosphate such as tricalcium phosphate if necessary (e.g., refer to Japanese Patent Application Laid-Open No. 2003-206133), a method for adding calcium hydrogen phosphate dihydrate to gypsum containing fluorine (e.g., refer to Journal of the European Ceramic Society, 26 (2006), 767-770). However, the conventional method for adding an aluminum compound such as sodium aluminate according to Japanese Patent Application Laid-Open No. 2001-253755 has a problem that handling is hard because of its chemical properties of the agent to be added. Further, the conventional method for preparing pH to raise and lower within certain values or ranges s according to Japanese Patent Application Laid-Open No. 2003-206133 has a problem that there is a lot of processing and the operation is complicated. Furthermore, the conventional method for only adding calcium hydrogen phosphate dihydrate according to Journal of the European Ceramic Society, 26 (2006), 767-770 has a problem that the correspondingly large amounts of calcium hydrogen phosphate dihydrate are required to realize a desired effect, so that it is uneconomical.

As a method for reducing the amount of fluorine elution coming from soil contaminated with fluorine, the following method has been known, that is, a method for suspending powdery particles of calcium hydrogen phosphate dihydrate in water to activate the surfaces of the particles and mixing the surface-activated particles with the soil contaminated with fluorine (e.g., refer to Japanese Patent Application Laid-Open No. 2007-216156). In this conventional method, calcium hydrogen phosphate dihydrate is not used as the method in Journal of the European Ceramic Society, 26 (2006), 767-770, and an aqueous suspension in which calcium hydrogen phosphate dihydrate is suspended in water and activated the surface thereof is used. Thus, this conventional method has an advantage that the amount of fluorine elution can be reduced efficiently. However, in this conventional method, an activation degree of calcium hydrogen phosphate dihydrate is not sufficient and, for practically reducing the amount of fluorine elution coming from the soil contaminated with fluorine to be 0.8 mg/L or less, there are problems that the corresponding amount of calcium hydrogen phosphate dihydrate is still required, and curing for a predetermined period of time is also necessary.

### SUMMARY OF THE INVENTION

### Problems to be Solved by the Invention

An objective of the present invention is to provide an insolubilizing agent for fluorine capable of economically, efficiently reducing, with an easy operation, the amount of fluorine elution coming from gypsum containing fluorine, soil contaminated with fluorine, or the like, to be 0.8 mg/L or less which is the soil environment standard, as one standard. Furthermore, an objective of the present invention is to provide gypsum reduced in the amount of fluorine elution by using the insolubilizing agent for fluorine, and a method of treating fluorine contaminated soil by using the insolubilizing agent for fluorine.

### Means for Solving the Problem

An aspect of the present invention to solve the aforementioned problems relates to an insolubilizing agent for fluorine including calcium hydrogen phosphate dihydrate which is activated for 0.5 minutes or more in water at 40°C or more, where a mass ratio of water/calcium hydrogen phosphate dihydrate is 25 or more. Further, another aspect of the present invention relates to gypsum which is reduced in the amount of fluorine elution by adding the insolubilizing agent for fluorine to gypsum containing fluorine. Furthermore, yet another aspect of the present invention relates to a method of treating fluorine contaminated soil including the step of adding the insolubilizing agent for fluorine to fluorine contaminated soil.

First of all, the insolubilizing agent for fluorine according to the present invention will be described below. The insolubilizing agent for fluorine according to the present invention includes calcium hydrogen phosphate dihydrate (CaHPO₄·2H₂O) which is activated for 0.5 minutes or more in water at 40°C or more, in which the mass ratio of water/calcium hydrogen phosphate dihydrate is 25 or more. It is well known that calcium hydrogen phosphate dihydrate insolubilizes fluorine as fluoroapatite. Furthermore, it is also well known that when a particle of calcium hydrogen phosphate dihydrate is treated to be suspended in water and, for example, treated to be stirred in the water, the particle is activated, having a structure in which a large number of microcrystals with nanometer (nm) scales is uniformly deposited on the surface of the particle, and the activated calcium hydrogen phosphate dihydrate can insolubilize fluorine as fluoroapatite more efficiently than calcium hydrogen phosphate dihydrate not activated. However, as described above, when the particle of calcium hydrogen phosphate dihydrate is simply treated to be suspended in water, the degree of activation is considerably insufficient.

Present inventors have researched a means for highly activating calcium hydrogen phosphate dihydrate and, as a result, they found out the followings. That is, the activation is greatly influenced by a concentration, a temperature, and a time, when calcium hydrogen phosphate dihydrate is treated in water. When a particle of calcium hydrogen phosphate dihydrate is treated for 0.5 minutes or more in water at 40°C or more in which a mass ratio of water/calcium hydrogen phosphate dihydrate is 25 or more, the particle comes to have a structure on which the surface of the particle is complicatedly etched, so that the activation degree rapidly increases. Details of this invention will be described later.

Therefore, in the present invention, the insolubilizing agent for fluorine includes calcium hydrogen phosphate dihydrate which is activated for 0.5 minutes or more in water at 40°C or more in which the mass ratio of water/calcium hydrogen phosphate dihydrate is 25 or more. As described above, the activation is greatly influenced by the mass ratio of water/calcium hydrogen phosphate dihydrate, the temperature, and the time, when calcium hydrogen phosphate dihydrate is activated in water. In these factors, the temperature affects the activation energy most. Thus, the temperature will be described at first here. In the present invention, the particle of calcium hydrogen phosphate dihydrate is activated in water at 40°C or more. However, when an actual operation and an activation processing are considered, the particle of calcium hydrogen phosphate dihydrate is ordinarily activated in water at a temperature within a range of 40°C to a boiling point of water, preferably activated in water at 40 to 80°C, and most preferably activated in water at 50 to 80°C.

Although the temperature greatly affects the activation of calcium hydrogen phosphate dihydrate in water most as mentioned above, the time and the concentration of calcium hydrogen phosphate dihydrate in water considerably affect the activation. In the present invention, the time when calcium hydrogen phosphate dihydrate is activated in water is set to be 0.5 minutes or more. However, when the actual operation and the activation processing are considered, the time is preferably set to be 0.5 to 100 minutes and, most preferably, 1 to 60 minutes. Further, regarding the concentration, the mass ratio of water/calcium hydrogen phosphate dihydrate is set to be 25 or more. However, when the actual operation and the activation processing are considered, the mass ratio is preferably set to be 25 to 500 and, most preferably 35 to 100. More particularly, for the activation in water, the particle of calcium hydrogen phosphate dihydrate is held in a state of dipping in water. However, it is preferable that the particle is stirred intermittently or continuously.

In the present invention, the insolubilizing agent for fluorine is made by activating calcium hydrogen phosphate dihydrate in water under predetermined conditions as mentioned above. However, it is preferable that the insolubilizing agent for fluorine is further separated and dried. As the separation processing, well-known techniques such as decantation, filtration, centrifugal separation, and the like can be used. Further, as a drying process, well-known techniques such as ventilation drying using a heating source, decompression drying, and the like in addition to sun drying can be used. The insolubilizing agent for fluorine which is activated in water under predetermined conditions and further dehydrated and dried, does not substantially affect the degree of activation, and is useful for handling, such as storage, conveyance, use or the like.

Then, the gypsum reduced in the elution of contained fluorine according to the present invention (which will be also simply called the gypsum of the present invention below) will be described below. The gypsum of the present invention is made by adding the insolubilizing agent for fluorine according to the present invention, which is described above, to gypsum containing fluorine. As for the gypsum containing fluorine used in the present invention, if the gypsum contains fluorine, a kind of the gypsum is not restricted especially. For example, gypsum obtained as a by-product at a time of generating phosphoric acid from rock phosphate by a wet phosphoric acid method, gypsum obtained as a by-product at a time of performing flue gas desulfurization by a lime method, gypsum obtained from a waste material of a gypsum board produced by using these gypsums, and the like, can be used.

The method itself for adding the insolubilizing agent for fluorine according to the present invention to gypsum containing fluorine is not restricted especially. Although the both the agent and the gypsum can be simply mixed as they are, it is preferable that the both are made to be a powdery state before mixing those. Further, water can be properly added as necessary before mixing, during mixing, or after mixing the both. Furthermore, the mixture can be cured properly as necessary after mixing the both. As for the amount of addition of the insolubilizing agent for fluorine according to the present invention with respect to the gypsum containing fluorine, the addition ratio of the insolubilizing agent for fluorine to the gypsum is ordinary 0.5 mass parts or more per 100 mass parts of the gypsum, and preferably 0.5 to 5 mass parts. When the amount of addition of the insolubilizing agent for fluorine according to the present invention is set to be less than 0.5 mass parts per 100 mass parts of the gypsum containing fluorine, in such a condition, there is a tendency in which it is practically difficult to make the amount of fluorine elution coming from gypsum to be 0.8 mg/L or less which is the soil environment standard. By contrast, even when the amount of addition of the insolubilizing agent for fluorine according to the present invention is set to be more than 5 mass parts, the manifestation of effectiveness hardly changes. Since the gypsum of the present invention is the gypsum reduced in the amount of fluorine elution to be 0.8 mg/L or less which is the soil environment standard, the gypsum can be subjected to landfill disposal as it is. However, the gypsum can be reused as a raw material for a gypsum board, a plaster, a soil solidifying agent, or the like.

Finally, the method of treating fluorine contaminated soil according to the present invention (which will be simply called the treatment method of the present invention below) will be described below. The treatment method of the present invention is a method for adding the insolubilizing agent for fluorine according to the present invention, which is described above, to fluorine contaminated soil. The method itself for adding the insolubilizing agent for fluorine according to the present invention to the fluorine contaminated soil is not restricted especially. Although the both of the agent and the soil can be simply mixed as they are, water content can be prepared according to necessity by properly dehydrating or adding water before mixing, during mixing, or after mixing the both. Further, the mixture can be properly cured after mixing the both according to necessity. When the water content is prepared, it is preferable that the water content after mixing the both is prepared to be 5 to 20 mass %.

As for the amount of addition of the insolubilizing agent for fluorine according to the present invention to the fluorine contaminated soil, the addition amount of the insolubilizing agent for fluorine according to the present invention is set to be ordinarily 1 mass part or more per 100 mass parts of a dry product of fluorine contaminated soil and preferably 1 to 20 mass parts. When the addition amount of the insolubilizing agent for fluorine according to the present invention is set to be less than 1 mass part per 100 mass parts of the dry product of fluorine contaminated soil, there is a tendency in which it is practically difficult to make the amount of fluorine elution coming from fluorine contaminated soil to be 0.8 mg/L or less which is the soil environment standard. By contrast, even when the amount of addition of the insolubilizing agent for fluorine according to the present invention is more than 5 mass parts, the manifestation of effectiveness hardly changes.

### Effect of the Invention

According to the present invention, the amount of fluorine elution coming from gypsum containing fluorine, soil contaminated with fluorine, or the like can be more economically, efficiently reduced , with an easy operation, to be 0.8 mg/L or less which is the soil environment standard, as one standard.

### BRIEF EXPLANATION OF DRAWINGS

Fig. 1 is a scanning electron microscopic photograph with a magnification of 5000, which illustrates the particle surface of calcium hydrogen phosphate dihydrate used as a raw material for obtaining an insolubilizing agent for fluorine according to the present invention.
Fig. 2 is a scanning electron microscopic photograph with a magnification of 5000, which illustrates the particle surface of calcium hydrogen phosphate dihydrate according to the present invention.
Fig. 3 is a graph illustrating the influence of a temperature to an amount of fluorine elution in an activation test for obtaining an insolubilizing agent for fluorine according to the present invention.
Fig. 4 is a graph illustrating the influence of a time to the amount of fluorine elution in an activation test for obtaining an insolubilizing agent for fluorine according to the present invention.
Fig. 5 is a graph illustrating the influence of a mass ratio of water/calcium hydrogen phosphate dihydrate to the amount of fluorine elution in an activation test for obtaining an insolubilizing agent for fluorine according to the present invention.
Fig. 6 is a graph illustrating, in gypsum of the present invention, the influence of the amount of addition mass parts of an insolubilizing agent for fluorine according to the present invention to the amount of fluorine elution coming from gypsum, where the amount of addition mass parts of the insolubilizing agent for fluorine is per 100 mass parts of gypsum.
Fig. 7 is a graph illustrating, in a treatment method of the present invention, the influence of the amount of mass parts of an insolubilizing agent for fluorine according to the present invention to the amount of fluorine elution coming from fluorine contaminated soil, where the amount of addition mass parts of the insolubilizing agent for fluorine is per 100 mass parts of a dry product of fluorine contaminated soil.

### DETAILED DESCRIPTION OF PREFERRED EMBODIMENT

### Test Division 1

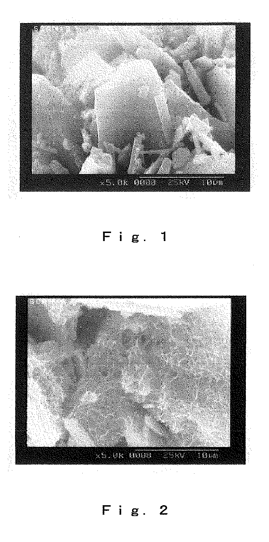

Particles of calcium hydrogen phosphate dihydrate were stirred for 1 hour in water at a temperature of 25°C, 30°C, 35°C, 40°C, 45°C, 50°C, 60°C, 70°C, or 80°C, where a mass ratio of water/calcium hydrogen phosphate dihydrate was 100, and the surfaces of the particles were etched. Then, the particles were dehydrated by filtration, and ventilated and dried with warm air at 60°C, Accordingly, the activated particles, that is, insolubilizing agents for fluorine in a total of 9 divisions were obtained. Fig. 1 is a scanning electron microscopic photograph with a magnification of 5000, which illustrates the particle surface of calcium hydrogen phosphate dihydrate used as a raw material. Fig. 2 is a scanning electron microscopic photograph with a magnification of 5000, which illustrates the particle surface of calcium hydrogen phosphate dihydrate activated in water at 50°C. The particle surface of the former calcium hydrogen phosphate dihydrate is smooth. By contrast, the surface particle of the later calcium hydrogen phosphate dihydrate is complicatedly etched.

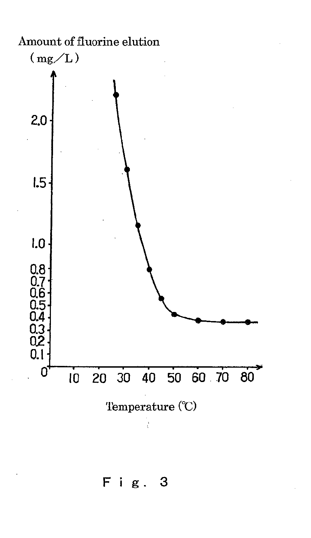

As gypsum containing fluorine, gypsum discharged as a by product from a thermal power station at a time of flue gas desulfurization by a lime method was used. To 50g of the gypsum, 0.25g of the insolubilizing agent for fluorine in a total of 9 divisions mentioned above, and 500ml of pure water were added. The mixture was shaken at a speed of 200 times per minute for 6 hours, and left to stand for 10 minutes. Then, a supernatant liquid was filtrated with a membrane filter of 0.45nm , so that an elution liquid was obtained. The concentration of fluorine in the elution liquid was measured by an ion selective electrode so that the amount of fluorine elution was acquired (the lower limit of determination was 0.02 mg/L). These results were shown in Table 1 and Fig. 3. A blank in Table 1 indicates the amount of fluorine elution measured for the gypsum to which the insolubilizing agent for fluorine was not added. Clearly from Table 1 and Fig. 3, the amount of fluorine elution rapidly becomes low until the temperature, when the particle of calcium hydrogen phosphate dihydrate is activated in water, comes to be 40°C, but is hardly changed at the temperature of 50°C or more. This is why the temperature is ordinarily 40°C to a boiling point of water, preferably 40 to 80°C, and most preferably 50 to 80°C in the present invention, considering the actual operation and the activation processing.

**Table 1**

| Division | Temperature in water at a time of activation (°C) | Amount of fluorine elution (mg/L) |
|---|---|---|
| Blank | - | 6.66 |
| Comparative example 1 | 25 | 2.20 |
| Comparative example 2 | 30 | 1.60 |
| Comparative example 3 | 35 | 1.15 |
| Example 1 | 40 | 0.79 |
| Example 2 | 45 | 0.55 |
| Example 3 | 50 | 0.41 |
| Example 4 | 60 | 0.37 |
| Example 5 | 70 | 0.36 |
| Example 6 | 80 | 0.36 |

### Test Division 2

Particles of calcium hydrogen phosphate dihydrate were stirred for 0.25 minutes, 0.5 minutes, 1 minute, 2.5 minutes, 5 minutes, 7.5 minutes, 10 minutes, and 60 minutes in water at a temperature of 60°C, where a mass ratio of water/calcium hydrogen phosphate dihydrate was 100, and the surfaces of the particles were etched. Then, the particles were dehydrated by filtration, and ventilated and dried with warm air at 60°C. Accordingly, the activated particles, that is, insolubilizing agents for fluorine in a total of 7 divisions were obtained.

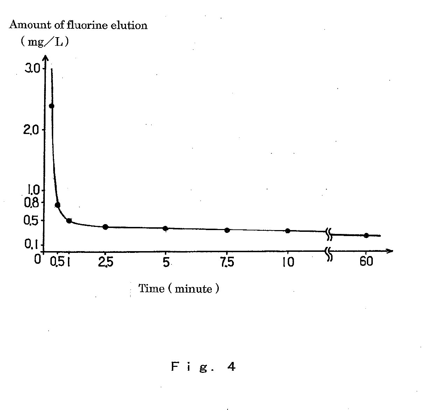

As gypsum containing fluorine, gypsum discharged as a by-product from a thermal power station at a time of flue gas desulfurization by a lime method was used. To 50g of the gypsum, 0.25g of the insolubilizing agent for fluorine in a total of 7 divisions mentioned above, and 500ml of pure water were added. Then, the amount of fluorine elution was measured like the test division 1 (the lower limit of determination was 0.02 mg/L). These results are shown Table 2 and Fig. 4. A blank in Table 2 indicates the amount of fluorine elution measured for the gypsum to which the insolubilizing agent for fluorine was not added. Clearly from Table 2 and Fig. 4, the amount of fluorine elution sharply becomes low until the time, when the particle of calcium hydrogen phosphate dihydrate is activated in water, comes to be 0.5 minutes, but hardly changed after 1 minute or more. This is why the time is ordinarily set to be 0.5 minutes or more, preferably 0.5 to 100 minutes, and most preferably 1 to 60 minutes in the present invention, considering the actual operation and the activation processing.

**Table 2**

| Division | Time (minute) | Amount of fluorine elution (mg/L) |
|---|---|---|
| Blank | - | 5.78 |
| Comparative example 4 | 0.25 | 2.40 |
| Example 7 | 0.5 | 0.77 |
| Example 8 | 1.0 | 0.50 |
| Example 9 | 2.5 | 0.40 |
| Example 10 | 5.0 | 0.35 |
| Example 11 | 7.5 | 0.33 |
| Example 12 | 10 | 0.32 |
| Example 13 | 60 | 0.25 |

### Test Division 3

Particles of calcium hydrogen phosphate dihydrate were stirred for 1 hour in water at a temperature of 60°C, where a mass ratio of water/calcium hydrogen phosphate dihydrate was 5, 10, 15, 25, 35, 50, or 100, and the surfaces of the particles were etched. Then, the particles were dehydrated by filtration, and ventilated and dried with warm air at 60°C. Accordingly, the activated particle, that is, insolubilizing agents for fluorine in a total of 7 divisions were obtained.

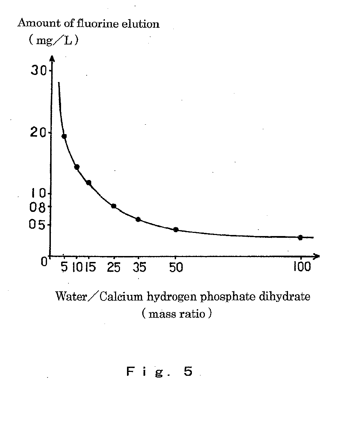

As gypsum containing fluorine, gypsum discharged as a by-product from a thermal power station at a time of flue gas desulfurization by a lime method was used. To 50g of the gypsum, 0.25g of the insolubilizing agent for fluorine in a total of 7 divisions mentioned above, and 500ml of pure water were added. Then, the amount of fluorine elution was measured like the test division 1 (the lower limit of determination was 0.02 mg/L). These results are shown Table 3 and Fig. 5. A blank in Table 3 indicates the amount of fluorine elution measured for the gypsum to which the insolubilizing agent for fluorine was not added. Clearly from Table 3 and Fig. 5, the amount of fluorine elution sharply comes to be low until the mass ratio of water/calcium hydrogen phosphate dihydrate, when the particle of calcium hydrogen phosphate dihydrate is activated in water, comes to be 25, but hardly changed after the mass ratio is 35 or more. This is why the mass ratio is 25 or more, preferably 25 to 500, and most preferably 35 to 100 in the present invention, considering the actual operation and the activation processing.

**Table 3**

| Division | Mass ratio of water / calcium hydrogen phosphate dihydrate | Amount of fluorine elution (mg/L) |
|---|---|---|
| Blank | - | 6.92 |
| Comparative example 5 | 5 | 1.94 |
| Comparative example 6 | 10 | 1.45 |
| Comparative example 7 | 15 | 1.20 |
| Example 14 | 25 | 0.80 |
| Example 15 | 35 | 0.60 |
| Example 16 | 50 | 0.41 |
| Example 17 | 10D | 0.30 |

### Test Division 4

Particles of calcium hydrogen phosphate dihydrate were stirred for 1 hour in water at a temperature of 60°C, where a mass ratio of water/calcium hydrogen phosphate dihydrate was 100, and the surfaces of the particles were etched. Then, the particles were dehydrated by filtration, and ventilated and dried with warm air at 60°C. Accordingly, an insolubilizing agent for fluorine mentioned above was obtained.

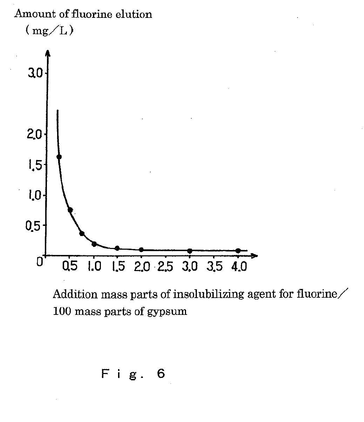

As gypsum containing fluorine, gypsum discharged as a by-product from a thermal power station at a time of flue gas desulfurization by a lime method was used. To 50g of the gypsum, 0.125g, 0.25g, 0.375g, 0.5g, 0.75g, 1.0g, 1.5g, or 2.0g of the insolubilizing agent for fluorine and 500ml of pure water were added. Then, the amount of fluorine elution was measured like the test division 1 (the lower limit of determination was 0.02 mg/L). These results were shown Table 4 and Fig. 6. A blank in Table 4 indicates the amount of fluorine elution measured for the gypsum to which the insolubilizing agent for fluorine was not added. Clearly from Table 4 and Fig. 6, the amount of fluorine elution from the gypsum containing fluorine sharply comes to be low until the mass parts of addition of the insolubilizing agent for fluorine according to the present invention per 100 mass parts of gypsum comes to be 0.5. This is why the mass parts of addition are ordinarily 0.5 or more, and preferably 0.5 to 5 in the present invention, considering an actual operation and the activation processing.

**Table 4**

| Division | Mass parts of addition of an insolubilizing agent for fluorine / 100 mass parts of gypsum | Amount of fluorine elution (mg/L) |
|---|---|---|
| Blank | - | 5.14 |
| Comparative example 8 | 0.25 | 1.61 |
| Example 18 | 0.50 | 0.75 |
| Example 19 | 0.75 | 0.37 |
| Example 20 | 1.00 | 0.19 |
| Example 21 | 1.50 | 0.11 |
| Example 22 | 2.00 | 0.09 |
| Example 23 | 3.00 | 0.08 |
| Example 24 | 4.00 | 0.07 |

### Test Division 5

Particles of calcium hydrogen phosphate dihydrate were stirred for 1 hour in water at a temperature of 60°C, where a mass ratio of water/calcium hydrogen phosphate dihydrate was 100, and the surfaces of the particles were etched. Then, the particles were dehydrated by filtration, and ventilated and dried with warm air at 60°C. Accordingly, an insolubilizing agent for fluorine was obtained.

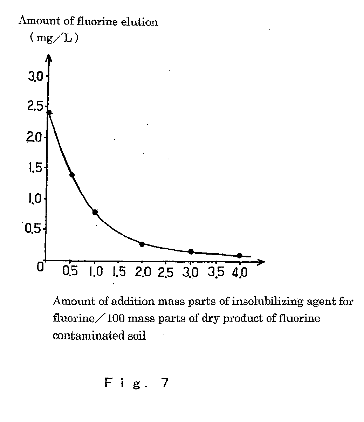

As fluorine contaminated soil, soil contaminated with fluorine, which was taken from a gypsum factory, was used. The soil was vacuum-dried at a temperature of 50°C, and sieved with a sieve of 10mm. To 50g of a dry product of the fluorine contaminated soil passing through the sieve, 0.25g, 0.5g, 1.0g, 1.5g, 2.0g, or 2.5g of the insolubilizing agent for fluorine mentioned above and 500ml of pure water were added. The mixture was shaken at a speed of 200 times per minute for 6 hours at amplitude of 4 to 5cm. Then, the mixture was filtrated with a filter paper of No. 5C and filtrated with a membrane filter of 0.45nm to obtain elution liquid. The concentration of fluorine in the elution liquid was measured with an ion selective electrode to acquire the amount of fluorine elution (the lower limit of determination was 0.02 mg/L). These results were shown in Table 5 and Fig. 7. A blank in Table 5 indicates the amount of fluorine elution measured for the dry product of the fluorine contaminated soil to which the insolubilizing agent for fluorine was not added. Clearly from Table 5 and Fig. 7, the amount of fluorine elution from the fluorine contaminated soil sharply comes to be low until the mass parts of addition of the insolubilizing agent for fluorine according to the present invention per 100 mass parts of the dry product of fluorine contaminated soil comes to be 1. This is why the mass parts of addition are ordinarily 1 or more, and preferably 1 to 20 in the present invention, considering an actual operation and the activation processing.

**Table 5**

| Division | Mass parts of addition of the insolubilizing agent for fluorine / 100 mass parts of a dry product of fluorine contaminated soil | Amount of fluorine elution (m/L) |
|---|---|---|
| Blank | - | 2.40 |
| Comparative example 9 | 0.5 | 1.40 |
| Example 25 | 1.0 | 0.79 |
| Example 26 | 2.0 | 0.25 |
| Example 27 | 3.0 | 0.13 |
| Example 28 | 4.0 | 0.08 |
| Example 29 | 5.0 | 0.06 |

## Claims

1. An insolubilizing agent for fluorine, comprising calcium hydrogen phosphate dihydrate activated for 0.5 minutes or more in water at 40°C or more, where a mass ratio of water/calcium hydrogen phosphate dihydrate is 25 or more.

2. The insolubilizing agent for fluorine as claimed in claim 1, wherein calcium hydrogen phosphate dihydrate is activated for 1 to 60 minutes in water at 50 to 80°C, where a mass ratio of water/calcium hydrogen phosphate dihydrate is 35 to 100.

3. The insolubilizing agent for fluorine as claimed in claim 1 or 2, wherein the insolubilizing agent for fluorine activated in water is further dehydrated and dried.

4. Gypsum reduced in the elution of contained fluorine, comprising gypsum containing fluorine to which the insolubilizing agent for fluorine as claimed in anyone of claims 1 to 3 is added.

5. The gypsum reduced in the elution of contained fluorine as claimed in claim 4, wherein the insolubilizing agent for fluorine is added at a ratio of 0.5 to 5 mass parts per 100 mass parts of gypsum.

6. A method of treating fluorine contaminated soil comprising a step of adding the insolubilizing agent for fluorine as claimed in anyone of claims 1 to 3 to fluorine contaminated soil.

7. The method of treating fluorine contaminated soil as claimed in claim 6, wherein the insolubilizing agent for fluorine is added at a ratio of 1 to 20 mass parts per 100 mass parts of a dry product of fluorine contaminated soil.
